# EUROPÄISCHE PATENTSCHRIFT

(11) **EP 3 821 213 B1**
(45) Veröffentlichungstag und Bekanntmachung des Hinweises auf die Patenterteilung: **07.09.2022**
(21) Anmeldenummer: 19739269.9
(22) Anmeldetag: 10.07.2019
(51) Int. Cl.: G01F 23/36

(54) **SIGNALGEBER FÜR EINEN FÜLLSTANDSSENSOR EINES BEHÄLTERS EINES KRAFTFAHRZEUGES UND VERFAHREN ZUR HERSTELLUNG EINES SIGNALGEBERS FÜR EINEN FÜLLSTANDSSENSOR EINES BEHÄLTERS EINES KRAFTFAHRZEUGES**
SIGNAL GENERATOR FOR A LEVEL SENSOR OF A CONTAINER OF A MOTOR VEHICLE AND METHOD FOR PRODUCING SUCH A SIGNAL GENERATOR
GÉNÉRATEUR DE SIGNAL POUR UN CAPTEUR DE NIVEAU D'UN RÉCIPIENT D'UN VÉHICULE AUTOMOBILE ET PROCÉDÉ DE PRODUCTION D'UN TEL GÉNÉRATEUR DE SIGNAL

(30) Priorität: 10.07.2018 DE 102018211399
(43) Veröffentlichungstag der Anmeldung: 19.05.2021
(73) Patentinhaber: Vitesco Technologies GmbH, 93055 Regensburg (DE)
(72) Erfinder: KALLWEIT, Gerhard, 65824 Schwalbach a. Ts. (DE); EICHELMANN, Claus, 65824 Schwalbach a. Ts. (DE)
(74) Vertreter: Vitesco Technologies
(86) Internationale Anmeldenummer: PCT/EP2019/068575
(87) Internationale Veröffentlichungsnummer: WO 2020/011871

(56) Entgegenhaltungen:
- EP-A1- 0 023 949
- EP-A2- 0 766 074
- WO-A2-03/003384
- DE-A1-102011 081 631
- FR-A1- 2 455 346
- US-A1- 2004 255 669
- US-B1- 6 369 690

## Beschreibung

Die Erfindung betrifft einen Signalgeber für einen Füllstandssensor eines Behälters eines Kraftfahrzeuges zur Erzeugung von elektrischen Signalen in Abhängigkeit eines Füllstandes, mit einer Widerstandsanordnung, mit einer mit der Widerstandsanordnung verbundenen Leiterbahnanordnung und mit einem in Abhängigkeit von dem Füllstand bewegbaren, über eine Schleifbahn der Leiterbahnanordnung gleitenden Schleifkontakt, wobei sich die Widerstandsanordnung und die Leiterbahnanordnung zumindest teilweise überlappen. Weiterhin betrifft die Erfindung ein Verfahren zur Herstellung eines Signalgebers für einen Füllstandssensor eines Behälters eines Kraftfahrzeuges, bei der eine Leiterbahnanordnung mit einer Widerstandsanordnung verbunden wird, wobei sich die Widerstandsanordnung und die Leiterbahnanordnung zumindest teilweise überlappen.

Füllstandssensoren der eingangs genannten Art sind als Potentiometer ausgebildet und werden beispielsweise in Kraftstoffbehältern zur Erfassung eines Schwimmers eingesetzt. Der Schwimmer folgt dem Füllstand im Behälter und ist bei solchen Füllstandssensoren über einen Hebelgeber mit dem Schleifkontakt verbunden. Damit gleitet der Schleifkontakt bei der Befüllung oder Entleerung des Behälters über die Schleifbahn der Leiterbahnanordnung. In Abhängigkeit von der Stellung des Schleifkontaktes auf der Leiterbahnanordnung hat der Signalgeber einen veränderlichen Widerstand.

Bei einem aus der Praxis bekannten Signalgeber ist die Widerstandsanordnung radial außerhalb der Leiterbahnanordnung angeordnet und über einzelne Leiterbahnen mit der Schleifbahn verbunden. Zur Herstellung wird zunächst die Leiterbahnanordnung erzeugt und anschließend die Widerstandsanordnung als Schicht auf die Leiterbahnanordnung aufgebracht.

Nachteilig bei dem bekannten Signalgeber ist, dass die Dicke der Widerstandsanordnung variiert, da die Leiterbahnen der Leiterbahnanordnung erhaben sind. Weiterhin hat der Signalgeber durch die Anordnung der Widerstandsanordnung radial außerhalb der Leiterbahnanordnung sehr große Abmessungen.

Die Druckschrift WO 03/003384 A1 offenbart einen Füllstandssensor, der als Schleifsensor ausgebildet ist. Der Füllstandssensor weist eine Leiterbahnanordnung und eine an die Leiterbahnanordnung angeschlossene Widerstandsanordnung auf, die radial außerhalb der Leiterbahnanordnung angeordnet ist.

Die Druckschrift DE 10 2011 081 631 A1 offenbart einen Füllstandssensor, der mittels eines Permanentmagneten eine Kugel bewegt, wobei die Kugel eine elastische, folienartige Leiterbahn in Kontakt mit einer Widerstandsbahn bringt und dadurch abhängig von der Position des Permanentmagneten ein spezifisches elektrisches Füllstandssignal ausgegeben wird.

Die Druckschrift FR 2 455 346 A1 offenbart einen Füllstandssensor, der als Schleifsensor ausgebildet ist. Der Füllstandssensor weist eine Leiterbahnanordnung auf, wobei eine Widerstandsanordnung auf der Leiterbahn angeordnet ist.

Die Druckschrift US 6,369,690 B1 offenbart einen Füllstandssensor, der als Schleifsensor ausgebildet ist. Der Füllstandssensor weist eine Leiterbahnanordnung auf, die längliche, parallel zueinander ausgerichtete, Kontaktelemente aufweist. Zwischen den Kontaktelementen ist ein Widerstandsmaterial angeordnet, das die Lücken zwischen den Kontaktelementen weitestgehend ausfüllt, um einen erhöhten Verschleiß eines Schleifkontakts, das mit der Schleifbahnanordnung zusammenwirkt, vorzubeugen.

Der Erfindung liegt das Problem zugrunde, einen Signalgeber der eingangs genannten Art so weiter zu bilden, dass er besonders kompakt ist und besonders kostengünstig herstellbar ist. Weiterhin betrifft die Erfindung ein Verfahren zur Herstellung eines Signalgebers, welches besonders kostengünstig anwendbar ist.

Das erst genannte Problem wird erfindungsgemäß dadurch gelöst, dass die Leiterbahnanordnung auf der Widerstandsanordnung angeordnet ist.

Durch diese Gestaltung kann die Widerstandsanordnung unbeeinflusst von der Leiterbahnanordnung erzeugt werden. Die Widerstandsanordnung lässt sich daher besonders einfach mit konstanter Schichtdicke und konstanten Widerstandswerten erzeugen. Weiterhin ist die Widerstandsanordnung durch die Leiterbahnanordnung vor Kontakt mit dem Schleifkontakt geschützt. Damit kann die Widerstandsanordnung besonders nahe oder im günstigsten Fall unterhalb der Schleifbahn angeordnet sein. Damit gestaltet sich der Signalgeber besonders kompakt.

Alternativ oder zusätzlich kann die Widerstandsanordnung auch unter der Schleifbahn angeordnet werden. Mit anderen Worten kann die Widerstandsanordnung zwischen der Schleifbahn und der Trägerplatine angeordnet sein.

Mit einer Anordnung der Widerstandsanordnung unterhalb der Schleifbahn wird verstanden, dass sich die Ebene der Widerstandsanordnung unter der Ebene der Schleifbahn befindet. Dabei sind Ausführungsformen umfasst, bei denen sich die Widerstandsanordnung und die Schleifbahn in einer Ansicht senkrecht zur Erstreckungsebene der Schleifbahn und/oder der Widerstandsanordnung überlappen oder nicht überlappen. Mit anderen Worten sind Ausführungsformen umfasst, die bei einer zweidimensionalen Projektion orthogonal zu mindestens einer der beiden Ebenen, eine Überlappung oder keine Überlappung zwischen Schleifbahn und Widerstandsanordnung aufweisen.

Mit einer Anordnung der Widerstandsanordnung unter der Schleifbahn wird verstanden, dass nur Ausführungsformen, bei denen die Widerstandsanordnung und die Schleifbahn bei einer Ansicht senkrecht zur Erstreckungsebene der Schleifbahn und/oder der Widerstandsanordnung einander überlappen, umfasst sind. Folglich sind hierbei Ausführungsformen ohne eine solche Überlappung nicht umfasst. Mit anderen Worten sind nur Ausführungsformen umfasst, die bei einer zweidimensionalen Projektion orthogonal zu mindestens einer der beiden Ebenen, eine Überlappung zwischen Schleifbahn und Widerstandsanordnung aufweisen.

Die Fertigung des Sensors gestaltet sich gemäß einer anderen vorteilhaften Weiterbildung der Erfindung besonders einfach, wenn die Widerstandsanordnung eine auf einer Trägerplatine angeordnete Schicht ist. (Durch diese Gestaltung sind die Trägerplatine mit der Leiterbahnanordnung und der Widerstandsanordnung sandwichartig übereinander angeordnet. Damit gestaltet sich der Sensor zudem besonders kompakt.

Ein Trimmen des Widerstandes der Widerstandsanordnung gestaltet sich gemäß einer anderen vorteilhaften Weiterbildung der Erfindung besonders einfach, wenn die Leiterbahnanordnung einzelne auf der Widerstandsanordnung angeordnete und mit dieser elektrisch verbundene Leiterbahnabschnitte hat. Durch diese Gestaltung ist die Widerstandsanordnung zwischen den Leiterbahnabschnitten einfach zugänglich und kann durch Materialabtrag einfach verändert werden.

Der Signalgeber gestaltet sich gemäß einer anderen vorteilhaften Weiterbildung der Erfindung besonders kompakt, wenn die Widerstandsanordnung unterhalb der Schleifbahn angeordnet ist.

Gemäß einer vorteilhaften Weiterbildung oder Alternative weist der Signalgeber Leiterbahnabschnitte auf, die sich quer zur Erstreckungsrichtung der Schleifbahn oder der Leiterbahnanordnung erstrecken. Dabei kann die Erstreckungsrichtung der Leiterbahnabschnitte auch nur eine Richtungskomponente quer zur Erstreckungsrichtung der Schleifbahn oder Leiterbahnanordnung aufweisen. Dabei können die Leiterbahnabschnitte beabstandet zueinander angeordnet sein. Besonders vorteilhaft ist es, wenn sie quer zu ihrer Erstreckungsrichtung zueinander beabstandet angeordnet sind. Dadurch kann die Zugänglichkeit zur Widerstandsanordnung verbessert werden, um mithilfe eines Materialabtrags eine Materialausnehmung an der Widerstandsanordnung zu schaffen, um den Widerstand der Widerstandsanordnung anzupassen.

Besonders vorteilhaft ist es, wenn die Leiterbahnabschnitte des Signalgebers so voneinander beabstandet sind, dass ein Materialabtrag in mindestens einem Bereich der Widerstandsanordnung möglich ist, der aufgrund der Beabstandung der Leiterbahnabschnitte zueinander nicht durch die Leiterbahnabschnitte bedeckt ist.

Die Widerstandsanordnung des Signalgebers weist mindestens eine Materialausnehmung auf, die zwischen zwei Abschnitten der Widerstandsanordnung angeordnet ist, wobei diese zwei Abschnitte der Widerstandsanordnung durch zwei zueinander benachbarte und beabstandete Leiterbahnabschnitte bedeckt sind. Durch solche Materialausnehmungen kann der elektrische Widerstandswert der Widerstandsanordnung angepasst werden. Vorteilhafterweise wird der Materialabtrag mithilfe eines Lasers durchgeführt, da dieser die Leiterbahnanordnung nicht beschädigt und präzise Materialausnehmungen zulässt.

In einer anderen oder weitergehenden Ausführungsform erstreckt sich die Materialausnehmung der Widerstandsanordnung von einer Seite der Widerstandsanordnung, die der Trägerplatine abgewandt ist, bis zu einer Seite der Widerstandsanordnung, die der Trägerplatine zugewandt ist.

In einer weitergehenden oder alternativen Ausführungsform ist die mindestens eine Materialausnehmungen der Widerstandsanordnung nicht direkt unter der Schleifbahn angeordnet. Mit anderen Worten ist keine Materialausnehmung der Widerstandsanordnung, die dazu vorgesehen ist, einen bestimmten elektrischen Widerstandswert der Widerstandsanordnung zu schaffen, zwischen Schleifbahn und Trägerplatine angeordnet. Eine Anordnung von Materialausnehmungen in diesem Bereich könnte dazu führen, dass sich Abriebspartikel, die durch den Schleifkontakt an der Schleifbahn entstehen, in Materialausnehmungen der Widerstandsanordnung festsetzen und so den Widerstandswert manipulieren und verfälschen.

In einer weitergehenden oder alternativen Ausführungsform weisen die Leiterbahnabschnitte des Signalgebers eine in ihrer Erstreckungsebene und quer zu ihrer Erstreckungsrichtung gemessene Materialstärke auf, die in Erstreckungsrichtung der Leiterbahnabschnitte abnimmt. Vorzugsweise nimmt diese Materialstärke mit steigendem Abstand der Leiterbahnabschnitte zur Schleifbahn ab. Dadurch wird der Zugang zur Widerstandsanordnung vereinfacht und die mindestens eine Materialausnehmung der Widerstandsanordnung kann größer dimensioniert werden.

In einer weitergehenden Ausführungsform weist mindestens einer der Leiterbahnabschnitte zwei Teilabschnitte auf, die zueinander unterschiedliche Materialstärken aufweisen. Es kann auch eine Mehrzahl solcher Leiterbahnabschnitte vorgesehen sein. Dabei befindet sich die mindestens eine Materialausnehmung der Widerstandsanordnung ausschließlich zwischen zwei Abschnitten der Widerstandsanordnung, die durch zwei Teilabschnitte zweier benachbarter Leiterbahnabschnitte bedeckt sind. Bei diesen beiden Teilabschnitten handelt es sich vorzugsweise um den jeweils einen Teilabschnitt mit der geringeren Materialstärke.

Gattungsgemäße Signalgeber werden häufig zusammen mit einem Schwenkhebel verwendet, an dessen Ende ein Schwimmer angeordnet ist, um den Füllstand eines Kraftstoffbehälters zu messen. Der Signalgeber ist dabei häufig beabstandet zur Lagerstelle dieses Schwenkhebels angeordnet, weshalb sich eine kurvenförmige Bewegung des Schleifgebers ergeben kann. Dadurch erstreckt sich auch die Schleifbahn und/oder die Leiterbahnanordnung kurvenförmig. Bevorzugterweise erstrecken sich die Leiterbahnabschnitte hierbei nach kurvenaußen. Dadurch wird der Abstand zwischen den benachbarten Leiterbahnabschnitten mit zunehmendem Abstand zur Schleifbahn oder Leiterbahnanordnung erhöht, was den Zugang zur Widerstandsanordnung erleichtert. Vorzugsweise erstreckt sich die Schleifbahn oder die Leiteranordnung bogenförmig.

In einer weitergehenden oder anderen Ausführungsform bedeckt die Leiterbahnanordnung 40% bis 100% oder 50% bis 100% der Fläche der Widerstandsanordnung. Es ist auch möglich, dass die Leiterbahnanordnung 60% bis 100% oder 70% bis 100% der Fläche der Widerstandsanordnung bedeckt. Bevorzugterweise bedeckt die Leiterbahnanordnung 80% bis 100% der Fläche der Widerstandsanordnung. Besonders bevorzugt sind 90% bis 100% der Fläche der Widerstandsanordnung durch die Leiterbahnanordnung bedeckt. Alternativ hierzu können auch 95% der Fläche der Widerstandsanordnung von der Leiterbahnanordnung bedeckt sein. Alle oben genannten Ausführungsformen können auch so ausgestaltet sein, dass maximal 90%, 95% oder 98% der Fläche der Widerstandsanordnung durch die Leiterbahnanordnung bedeckt wird. Dadurch wird gegenüber dem Stand der Technik ein sehr kompakter Aufbau geschaffen.

Das zweit genannte Problem, nämlich die Schaffung eines Verfahrens zur Herstellung eines Signalgebers, welches besonders kostengünstig anwendbar ist, wird erfindungsgemäß dadurch gelöst, dass die Leiterbahnanordnung auf der Widerstandsanordnung aufgebracht wird.

Hierdurch unterscheidet sich das erfindungsgemäße Verfahren von dem bekannten Verfahren durch eine Änderung der Reihenfolge der Erzeugung der Widerstandsanordnung und der Leiterbahnanordnung. Da zunächst die Widerstandsanordnung erzeugt wird, lässt sich diese mit besonders gleichmäßiger Dicke und damit konstanten Widerstandswerten erzeugen. Zudem kann die Widerstandsanordnung besonders nahe an der Schleifbahn angeordnet sein, weil sie von der Leiterbahnanordnung vor dem Schleifkontakt geschützt ist. Damit wird der Verbrauch der sehr kostenintensiven Materialien für die Widerstandsanordnung und für die Leiterbahnanordnung besonders gering gehalten.

Zur weiteren Verringerung der Fertigungskosten des Signalgebers trägt es gemäß einer anderen vorteilhaften Weiterbildung der Erfindung bei, wenn die Widerstandsanordnung auf eine Trägerplatine als Schicht aufgetragen wird.

Die Herstellung des Signalgebers gestaltet sich gemäß einer anderen vorteilhaften Weiterbildung der Erfindung besonders kompakt, wenn die Leiterbahnanordnung als einzelne Leiterbahnabschnitte auf der Widerstandsanordnung aufgebracht wird, so dass die Leiterbahnabschnitte mit der Widerstandsanordnung elektrisch leitend verbunden werden.

Zur weiteren Verringerung der Herstellungskosten des Signalgebers trägt es gemäß einer anderen vorteilhaften Weiterbildung der Erfindung bei, wenn die Widerstandsanordnung auf die Trägerplatine aufgedruckt wird.

Zur weiteren Verringerung der Herstellungskosten des Signalgebers trägt es gemäß einer anderen vorteilhaften Weiterbildung der Erfindung bei, wenn die Leiterbahnabschnitte unmittelbar auf die Widerstandsanordnung aufgedruckt wird.

Der Signalgeber gestaltet sich gemäß einer anderen vorteilhaften Weiterbildung der Erfindung besonders kompakt, wenn die Widerstandsanordnung flächig auf die Trägerplatine über eine von einem Schleifkontakt abgefahrene Schleifbahn aufgetragen und die Leiterbahnanordnung als einzelne, quer zum Bewegungsbereich des Schleifkontaktes angeordnete Leiterbahnabschnitte auf die Widerstandsanordnung aufgebracht wird.

Die Einstellung der Widerstandswerte der Widerstandsanordnung wird dadurch erreicht, dass nach dem Aufbringen der Leiterbahnanordnung die Widerstandsanordnung mit einem Laserstrahl durch Materialabtrag auf vorgesehene Widerstandswerte getrimmt wird.

Die Widerstandsanordnung wird auf vorgesehene Widerstandswerte getrimmt, indem der Laserstahl zwischen zwei benachbarten Leiterbahnabschnitten vorbeigeführt auf die Widerstandsanordnung gerichtet wird. Dadurch kann der Materialabtrag an der Widerstandsanordnung vorgenommen werden, der zur Materialausnehmung an der Widerstandsanordnung führt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Füllstandssensor mit einem erfindungsgemäßen Signalgeber,
- Fig. 2: stark vergrößert einen Teilbereich des Signalgebers aus Figur 1,
- Fig. 3: eine vergrößerte Darstellung der Einzelzeit III des Signalgebers aus Figur 2,
- Fig. 4: eine Schnittdarstellung durch den Signalgeber aus Figur 3 entlang der Linie IV - IV,
- Fig. 5: eine alternative Ausführungsform der Einzelheit III des Signalgebers aus Figur 2,
- Fig. 6: eine Schnittdarstellung durch den Signalgeber aus Figur 5 entlang der Linie VI - VI.

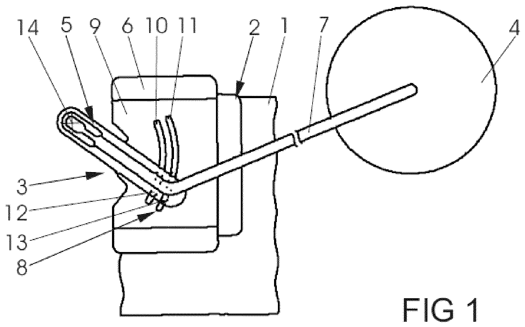

Figur 1 zeigt einen in einer senkrechten Wandung 1 innerhalb eines Kraftstoffbehälters montierten Füllstandssensor 2. Der Füllstandssensor 2 hat einen an einem Hebelarm 3 befestigen Schwimmer 4. Der Schwimmer 4 folgt einem nicht dargestellten Füllstand an Kraftstoff in dem Kraftstoffbehälter und verschwenkt dabei den Hebelarm 3. Der Hebelarm 3 ist mit einem aus Kunststoff gefertigten Bügel 5 an einem Träger 6 schwenkbar gelagert und hat einen an dem Bügel 5 befestigten Hebeldraht 7 zur Halterung des Schwimmers 4. Der Schwenkwinkel des Hebelarms 3 wird von einem als Potentiometer ausgebildeten Signalgeber 8 erfasst und in elektrische Signale umgesetzt. Der Signalgeber 8 hat zwei auf einer Trägerplatine 9 angeordnete Schleifbahnen 10, 11 und zwei an dem Bügel 5 befestigte und elektrisch miteinander verbundene Schleifkontakte 12, 13 zur Überbrückung der Schleifbahnen 9, 9'. Die Trägerplatine 9 ist an dem Träger 6 befestigt. Damit fallen die dem Füllstand an Kraftstoff entsprechenden elektrischen Signale an dem Träger 6 und damit an einem feststehenden Bauteil des Füllstandssensors 2 an. Der Hebelarm 3 hat eine schematisch dargestellte Lagerung 14 in dem Träger 6 mit senkrecht zur Zeichenebene verlaufender Lagerachse.

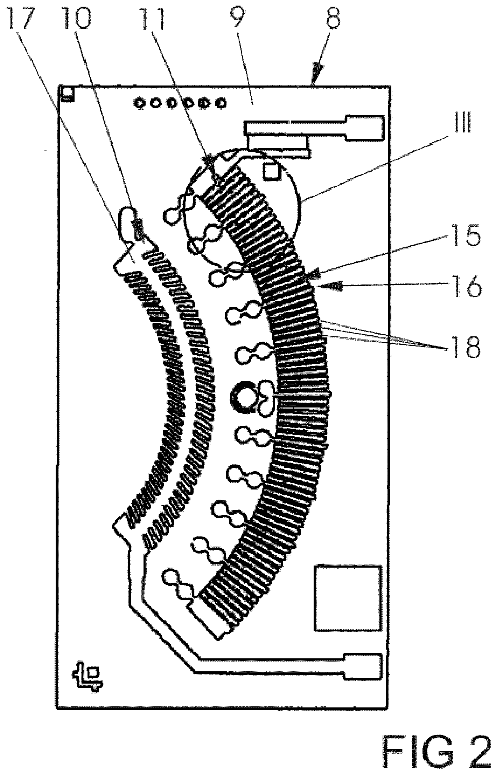

Figur 2 zeigt vergrößert die Trägerplatine 9 des Signalgebers 8 mit den darauf aufgebrachten Schleifbahnen 10, 11. Eine der Schleifbahnen 11 weist eine auf einer Widerstandsanordnung 15 aufgebrachte Leiterbahnanordnung 16 auf, während die andere Schleifbahn 10 als bogenförmiger elektrischer Leiter 17 ausgebildet ist. Die Leiterbahnanordnung 16 weist mehrere auf der Widerstandsanordnung 15 aufgebrachte Leiterbahnabschnitte 18 auf. Die Leiterbahnabschnitte 18 sind quer zur Bewegungsrichtung des in Figur 1 dargestellten Schleifkontakts 13 angeordnet und elektrisch leitend mit der Widerstandsanordnung 15 verbunden.

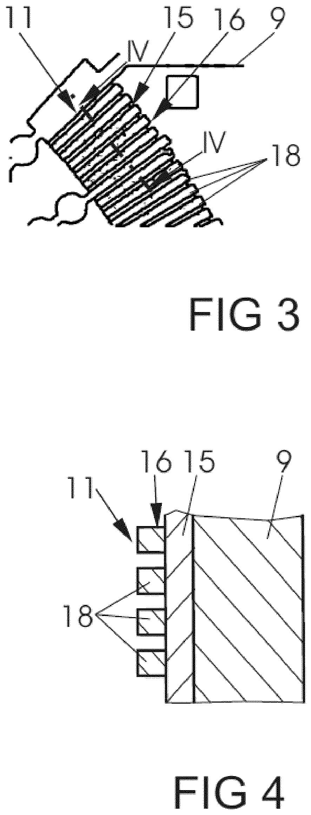

Figur 3 zeigt eine Einzelheit III der Trägerplatine 9 aus Figur 2 in einer vergrößerten Darstellung. Hierbei ist zu erkennen, dass die Leiterbahnabschnitte 18 geringfügig voneinander beabstandet sind. Zwischen den Leiterbahnabschnitten 18 ist die Widerstandsanordnung 15 sichtbar und für einen Laserstrahl zugänglich.

Figur 4 zeigt eine Schnittdarstellung durch die Trägerplatine 9 aus Figur 3 entlang der Linie IV - IV. Hierbei ist zu erkennen, dass die Widerstandsanordnung 15 als Schicht auf der Trägerplatine 9 angeordnet ist. Die Leiterbahnabschnitte 18 der Leiterbahnanordnung 16 sind auf der Schicht der Widerstandsanordnung 15 aufgedruckt.

Zur Herstellung wird zunächst die Schicht der Widerstandsanordnung 15 auf die Trägerplatine 9 aufgedruckt. Anschließend wird die Leiterbahnanordnung 16 auf die Widerstandsanordnung 15 aufgedruckt. In diesem Arbeitsgang kann gleichzeitig der bogenförmige elektrische Leiter 17 auf die Trägerplatine 9 aufgedruckt werden. Zum Trimmen des elektrischen Widerstandes der Widerstandsanordnung 15 wird mit einem Laserstrahl zwischen den Leiterbahnabschnitten 18 durch Materialabtrag die Schicht der Widerstandsanordnung 15 teilweise abgetragen.

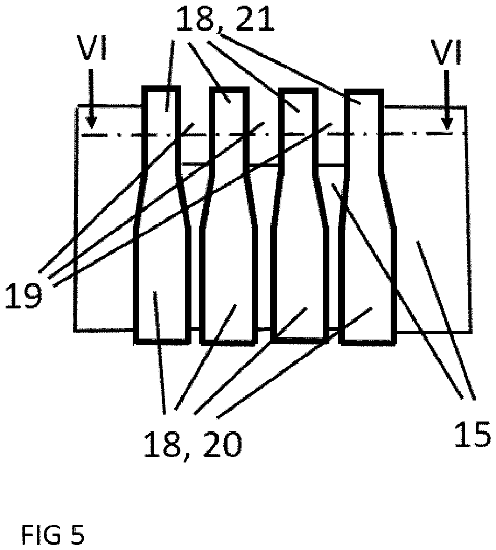

Figur 5 zeigt eine alternative Ausführungsform der Einzelheit III der Trägerplatine 9 aus Figur 2 in einer vergrößerten Darstellung. Hierbei ist zu erkennen, dass die Leiterbahnabschnitte 18 geringfügig voneinander beabstandet sind. Zwischen den Leiterbahnabschnitten 18 ist die Widerstandsanordnung 15 sichtbar. Zudem ist ersichtlich, dass die Leiterbahnabschnitte 18 jeweils zwei Teilabschnitte 20, 21 aufweisen, die zueinander unterschiedliche Materialstärken aufweisen. Die Materialstärke wird in der Erstreckungsebene der Leiterbahnabschnitte 18 und quer zu ihrer Erstreckungsrichtung gemessen. Die Materialausnehmungen 19 der Widerstandsanordnung 15 sind jeweils zwischen zwei Abschnitten der Widerstandsanordnung 22 angeordnet, die durch zwei Teilabschnitte zweier benachbarter Leiterbahnabschnitte 18, 21 bedeckt sind. Bei diesen beiden Teilabschnitten 21 handelt es sich um den jeweils einen Teilabschnitt 21 mit der geringeren Materialstärke.

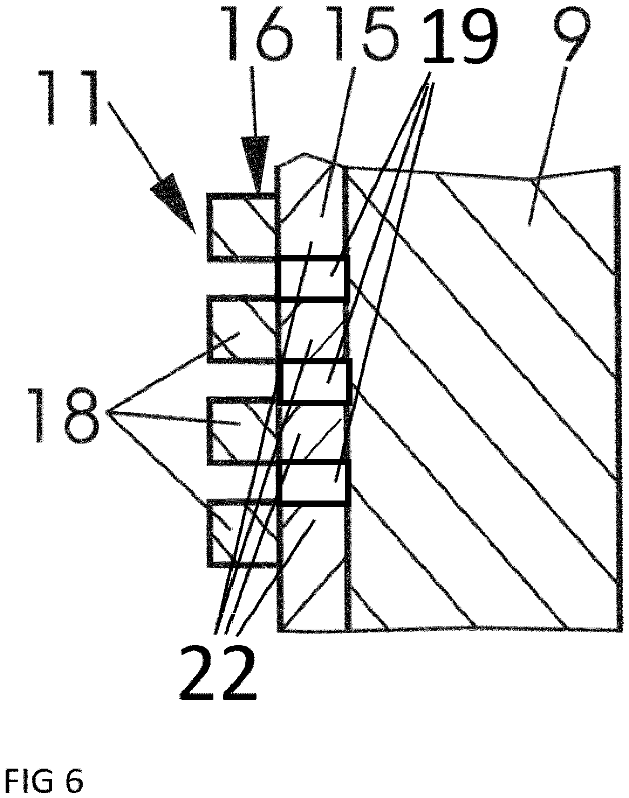

Figur 6 zeigt eine Schnittdarstellung durch die Trägerplatine 9 aus Figur 5 entlang der Linie VI - VI. Hierbei ist zu erkennen, dass die Widerstandsanordnung 15 als Schicht auf der Trägerplatine 9 angeordnet ist. Die Leiterbahnabschnitte 18 der Leiterbahnanordnung 16 sind auf der Schicht der Widerstandsanordnung 15 aufgedruckt. Zudem ist der Figur 6 zu entnehmen, dass die Materialausnehmungen 19 der Widerstandsanordnung 15 jeweils zwischen zwei Abschnitten der Widerstandsanordnung 22 angeordnet ist, die durch zwei benachbarte Leiterbahnabschnitte 18 bedeckt sind.

## Patentansprüche

1. Signalgeber (8) für einen Füllstandssensor (2) eines Behälters eines Kraftfahrzeuges zur Erzeugung von elektrischen Signalen in Abhängigkeit eines Füllstandes, mit einer Widerstandsanordnung (15), mit einer mit der Widerstandsanordnung (15) verbundenen Leiterbahnanordnung (16) und mit einem in Abhängigkeit von dem Füllstand bewegbaren, über eine Schleifbahn (11) der Leiterbahnanordnung (16) gleitenden Schleifkontakt (13), wobei sich die Widerstandsanordnung (15) und die Leiterbahnanordnung (16) zumindest teilweise überlappen, wobei die Leiterbahnanordnung (16) auf der Widerstandsanordnung (15) angeordnet ist, **dadurch gekennzeichnet , dass** die Widerstandsanordnung (15) mindestens eine Materialausnehmung aufweist, die zwischen zwei Abschnitten der Widerstandsanordnung (15) angeordnet ist, die durch zwei zueinander benachbarte Leiterbahnabschnitte (18) bedeckt sind.

2. Signalgeber nach Anspruch 1, **dadurch gekennzeichnet , dass** die Widerstandsanordnung (15) eine auf einer Trägerplatine (9) angeordnete Schicht ist.

3. Signalgeber nach Anspruch 1 oder 2, **dadurch gekennzeichnet , dass** die Leiterbahnanordnung (16) einzelne auf der Widerstandsanordnung (15) angeordnete und mit dieser elektrisch verbundene Leiterbahnabschnitte (18) hat.

4. Signalgeber nach zumindest einem der Ansprüche 1 bis 3, **dadurch gekennzeichnet , dass** die Widerstandsanordnung (15) unterhalb der Schleifbahn (11) angeordnet ist.

5. Signalgeber nach zumindest einem der Ansprüche 1 bis 4, **dadurch** gekennze**ich**net , dass sich die Leiterbahnabschnitte (18) quer zur Erstreckungsrichtung der Schleifbahn (11) erstrecken, wobei die Leiterbahnabschnitte (18), quer zu ihrer Erstreckungsrichtung, beabstandet zueinander angeordnet sind.

6. Signalgeber nach zumindest einem der Ansprüche 1 bis 5,
**dadurch gekennzeichnet, dass** keine Materialausnehmung der Widerstandsanordnung (15) unter der Schleifbahn (11) angeordnet ist.

7. Verfahren zur Herstellung eines Signalgebers (8) für einen Füllstandssensor (2) eines Behälters eines Kraftfahrzeuges, bei der eine Leiterbahnanordnung (16) mit einer Widerstandsanordnung (15) verbunden wird, wobei sich die Widerstandsanordnung (15) und die Leiterbahnanordnung (16) zumindest teilweise überlappen, wobei die Leiterbahnanordnung (16) auf der Widerstandsanordnung (15) aufgebracht wird, wobei nach dem Aufbringen der Leiterbahnanordnung (16) die Widerstandsanordnung (15) mit einem Laserstrahl durch Materialabtrag auf vorgesehene Widerstandswerte getrimmt wird, **dadurch gekennzeichnet , dass** die Widerstandsanordnung (15) auf vorgesehene Widerstandswerte getrimmt wird, indem der Laserstrahl zwischen zwei benachbarten Leiterbahnabschnitten (18) vorbeigeführt auf die Widerstandsanordnung (15) gerichtet wird, um den Materialabtrag vorzunehmen.

8. Verfahren nach Anspruch 7, **dadurch gekennzeichnet, dass** die Widerstandsanordnung (15) auf eine Trägerplatine (9) als Schicht aufgetragen wird.

9. Verfahren nach Anspruch 7 oder 8, **dadurchgekennzeichnet,** dass die Leiterbahnanordnung (16) als einzelne Leiterbahnabschnitte (18) auf der Widerstandsanordnung (15) aufgebracht wird, so dass die Leiterbahnabschnitte (18) mit der Widerstandsanordnung (15) elektrisch leitend verbunden werden.

10. Verfahren nach zumindest einem der Ansprüche 7 bis 9, **dadurch gekennzeichnet , dass** die Widerstandsanordnung (15) auf die Trägerplatine (9) aufgedruckt wird.

11. Verfahren nach zumindest einem der Ansprüche 7 bis 10, **dadurch gekennzeichnet , dass** die Leiterbahnabschnitte (18) unmittelbar auf die Widerstandsanordnung (15) aufgedruckt wird.

12. Verfahren nach zumindest einem der Ansprüche 7 bis 11, **dadurch gekennzeichnet , dass** die Widerstandsanordnung (15) flächig auf die Trägerplatine (9) über eine von einem Schleifkontakt (13) abgefahrene Schleifbahn (11) aufgetragen und die Leiterbahnanordnung (16) als einzelne, quer zum Bewegungsbereich des Schleifkontaktes (13) angeordnete Leiterbahnabschnitte (18) auf die Widerstandsanordnung (15) aufgebracht wird.

## Claims

1. Signal transmitter (8) for a fill level sensor (2) of a container of a motor vehicle for producing electric signals as a function of a fill level, having a resistor arrangement (15), having a conductor path arrangement (16) connected to the resistor arrangement (15), and having a sliding contact (13) which can be moved in accordance with the fill level and slides across a slideway (11) of the conductor path arrangement (16), wherein the resistor arrangement (15) and the conductor path arrangement (16) at least partially overlap, wherein the conductor path arrangement (16) is arranged on the resistor arrangement (15), **characterized in that** the resistor arrangement (15) has at least one material recess, which is arranged between two sections of the resistor arrangement (15) that are covered by two mutually adjacent conductor path sections (18).

2. Signal transmitter according to Claim 1, **characterized in that** the resistor arrangement (15) is a layer arranged on a carrier board (9).

3. Signal transmitter according to Claim 1 or 2, **characterized in that** the conductor path arrangement (16) has individual conductor path sections (18) arranged on the resistor arrangement (15) and connected electrically thereto.

4. Signal transmitter according to at least one of Claims 1 to 3, **characterized in that** the resistor arrangement (15) is arranged below the slideway (11).

5. Signal transmitter according to at least one of Claims 1 to 4, **characterized in that** the conductor path sections (18) extend transversely to the direction of extent of the slideway (11), wherein the conductor path sections (18) are arranged spaced apart from one another transversely to the direction of extent thereof.

6. Signal transmitter according to at least one of Claims 1 to 5,
**characterized in that** no material recess in the resistor arrangement (15) is arranged below the slideway (11).

7. Method for producing a signal transmitter (8) for a fill level sensor (2) of a container of a motor vehicle, in which a conductor path arrangement (16) is connected to a resistor arrangement (15), wherein the resistor arrangement (15) and the conductor path arrangement (16) at least partially overlap, wherein the conductor path arrangement (16) is applied to the resistor arrangement (15), wherein the resistor arrangement (15) is trimmed to envisaged resistance values with a laser beam by removal of material after the application of the conductor path arrangement (16), **characterized in that** the resistor arrangement (15) is trimmed to envisaged resistance values by directing the laser beam at the resistor arrangement (15) while moving it between two adjacent conductor path sections (18) in order to perform the removal of material.

8. Method according to Claim 7, **characterized in that** the resistor arrangement (15) is applied as a layer to a carrier board (9).

9. Method according to Claim 7 or 8, **characterized in that** the conductor path arrangement (16) is applied as individual conductor path sections (18) on the resistor arrangement (15), with the result that the conductor path sections (18) are connected in an electrically conducting manner to the resistor arrangement (15).

10. Method according to at least one of Claims 7 to 9, **characterized in that** the resistor arrangement (15) is printed onto the carrier board (9).

11. Method according to at least one of Claims 7 to 10, **characterized in that** the conductor path sections (18) are printed directly onto the resistor arrangement (15).

12. Method according to at least one of Claims 7 to 11, **characterized in that** the resistor arrangement (15) is applied over an area of the carrier board (9), over a slideway (11) traversed by a sliding contact (13), and the conductor path arrangement (16) is applied to the resistor arrangement (15) as individual conductor path sections (18) arranged transversely to the region of movement of the sliding contact (13).

## Revendications

1. Transmetteur de signal (8) pour un détecteur de niveau de remplissage (2) d'un réservoir d'un véhicule automobile destiné à générer des signaux électriques en fonction d'un niveau de remplissage, comprenant un arrangement de résistances (15), comprenant un arrangement de pistes conductrices (16) relié à l'arrangement de résistances (15) et comprenant un contact à frottement (13) pouvant être déplacé en fonction du niveau de remplissage et glissant sur une piste de frottement (11) de l'arrangement de pistes conductrices (16), l'arrangement de résistances (15) et l'arrangement de pistes conductrices (16) se chevauchant au moins partiellement, l'arrangement de pistes conductrices (16) étant disposé sur l'arrangement de résistances (15), **caractérisé en ce que** l'arrangement de résistances (15) possède au moins un creux de matériau, lequel est disposé entre deux portions de l'arrangement de résistances (15) qui sont recouvertes par deux portions de piste conductrice (18) voisines l'une de l'autre.

2. Transmetteur de signal selon la revendication 1, **caractérisé en ce que** l'arrangement de résistances (15) est une couche disposée sur une platine porteuse (9).

3. Transmetteur de signal selon la revendication 1 ou 2, **caractérisé en ce que** l'arrangement de pistes conductrices (16) comprend des portions de piste conductrice (18) disposées individuellement sur l'arrangement de résistances (15) et reliées électriquement avec celui-ci.

4. Transmetteur de signal selon au moins l'une des revendications 1 à 3, **caractérisé en ce que** l'arrangement de résistances (15) est disposé au-dessous de la piste de frottement (11).

5. Transmetteur de signal selon au moins l'une des revendications 1 à 4, **caractérisé en ce que** les portions de piste conductrice (18) s'étendent transversalement par rapport à la direction d'extension de la piste de frottement (11), les portions de piste conductrice (18) étant, transversalement par rapport à leur direction d'extension, disposées espacées les unes des autres.

6. Transmetteur de signal selon au moins l'une des revendications 1 à 5, **caractérisé en ce qu'**aucun creux de matériau de l'arrangement de résistances (15) n'est disposé au-dessous de la piste de frottement (11).

7. Procédé de fabrication d'un transmetteur de signal (8) pour un détecteur de niveau de remplissage (2) d'un réservoir d'un véhicule automobile, avec lequel un arrangement de pistes conductrices (16) est relié à un arrangement de résistances (15), l'arrangement de résistances (15) et l'arrangement de pistes conductrices (16) se chevauchant au moins partiellement, l'arrangement de pistes conductrices (16) étant déposé sur l'arrangement de résistances (15), l'arrangement de résistances (15), après l'application, étant ajusté à des valeurs de résistance prévues avec un rayon laser par enlèvement de matériau, **caractérisé en ce que** l'arrangement de résistances (15) est ajusté aux valeurs de résistance prévues en dirigeant le rayon laser sur l'arrangement de résistances (15) en le faisant passer entre deux portions de piste conductrice (18) voisines afin de procéder à l'enlèvement de matériau.

8. Procédé selon la revendication 7, **caractérisé en ce que** l'arrangement de résistances (15) est appliqué sur une platine porteuse (9) sous la forme d'une couche.

9. Procédé selon la revendication 7 ou 8, **caractérisé en ce que** l'arrangement de pistes conductrices (16) est déposé sur l'arrangement de résistances (15) sous la forme de portions de piste conductrice (18) individuelles, de telle sorte que les portions de piste conductrice (18) sont reliées de manière électriquement conductrice à l'arrangement de résistances (15).

10. Procédé selon au moins l'une des revendications 7 à 9, **caractérisé en ce que** l'arrangement de résistances (15) est imprimé sur la platine porteuse (9).

11. Procédé selon au moins l'une des revendications 7 à 10, **caractérisé en ce que** les portions de piste conductrice (18) sont imprimées directement sur l'arrangement de résistances (15).

12. Procédé selon au moins l'une des revendications 7 à 11, **caractérisé en ce que** l'arrangement de résistances (15) est appliqué à plat sur la platine porteuse (9) au-dessus d'une piste de frottement (11) parcourue par un contact à frottement (13) et l'arrangement de pistes conductrices (16) est déposé sur l'arrangement de résistances (15) sous la forme de portions de piste conductrice (18) individuelles disposées transversalement par rapport à la plage de mouvement du contact à frottement (13).
